# EUROPÄISCHE PATENTSCHRIFT

(11) **EP 0 913 600 B1**
(45) Veröffentlichungstag und Bekanntmachung des Hinweises auf die Patenterteilung: **16.10.2002**
(21) Anmeldenummer: 97119194.5
(22) Anmeldetag: 03.11.1997
(51) Int. Cl.: F16H 1/22, B64C 13/42

(54) **Einrichtung zur Erzeugung einer Längsbewegung und -oder einer Drehbewegung**
Arrangement for producing a rotary or a linear movement
Dispositif pour la production d'un mouvement rotatif ou linéaire

(43) Veröffentlichungstag der Anmeldung: 06.05.1999
(60) Teilanmeldung: 01125227.7
(73) Patentinhaber: HONEYWELL AG, 63067 Offenbach am Main (DE)
(72) Erfinder: Palatzky, Roland, Dipl.-Ing., 86356 Neussaes (DE)
(74) Vertreter: Torggler, Paul Norbert, Dr.

(56) Entgegenhaltungen:
- EP-A- 0 325 027
- EP-A- 0 457 711
- EP-A- 0 551 197
- US-A- 3 662 550
- US-A- 3 665 760

## Beschreibung

Die Erfindung betrifft eine Einrichtung zur Erzeugung einer Längsbewegung und/oder einer Drehbewegung, mit zwei oder mehreren, vorzugsweise vier, Elektromotoren, deren Motorwellen Ritzel tragen, die direkt in die Außenverzahnung eines gemeinsamen Sonnenrades eingreifen und dieses antreiben, siehe zum Beispiel die EP-A-325027.

Solche Einrichtungen werden zum Antrieb der verschiedensten Bauteile, beispielsweise in der Luftfahrt, eingesetzt und häufig als "Aktuatoren" bezeichnet. Insbesondere beim Einsatz in der Luftfahrt, also in Flugzeugen, ist es aus sicherheitstechnischen Gründen günstig, den Aktuator so auszuführen, daß bei Auftreten eines einfachen mechanischen Fehlers (beispielsweise Versagen, Bruch oder Verlieren eines Bauteiles) nicht ein Ausfall des gesamten Aktuators folgt.

Bekannte elektromechanische Aktuatoren führen z. B. zwei Elektromotore auf ein Differentialgetriebe, das dann Längs- oder Drehbewegungen erzeugt. Solche Differentialgetriebe sind jedoch sehr aufwendig und teuer.

In der EP 0457711 A1 wird ein Antrieb zur Verwendung bei Hubschrauberrotoren gezeigt. Der Hubschrauberrotor wird hier von drei Motoren über ein Sonnenrad angetrieben, wobei jedem Motor ein separates Getriebe zur Kraftübertragung zwischen Motor und Sonnenrad zugeordnet ist. Jedes getriebe enthält eine Welle mit zwei Ritzeln mit räumlich getrennten Verzahnungen, wobei die Verzahnungen jedes Ritzels jeweils in gesonderte Sonnenrad-Verzahnungen am Sonnenrad eingreifen. Der Zweck der doppelten Ritzel wird jedoch nicht beschrieben.

Aufgabe der Erfindung ist es, eine bezüglich der Ausfallsicherheit weiter verbesserte Einrichtung der eingangs genannten Gattung zu schaffen.

Gemäß einer ersten Variante der Erfindung wird dies dadurch erreicht, daß die Motorwellen jeweils ein Ritzel mit räumlich getrennten Verzahnungen tragen, wobei die Verzahnungen jedes Ritzels jeweils in gesonderte Sonnenrad-Verzahnungen am Sonnenrad eingreifen.

Die Verwendung eines von mehreren Ritzeln angetriebenen gemeinsamen Sonnenrades erlaubt eine verhältnismäßig einfache Konstruktion. Bei Sonnenrädern und Ritzeln mit nur einer Verzahnung besteht jedoch die Gefahr, daß bei Bruch eines Ritzels die gesamte Sonnenrad-Verzahnung zerstört wird und damit der Antrieb lahmgelegt wird. Gemäß der Erfindung weist nun jedes Ritzel zumindest zwei räumlich getrennte Verzahnungen auf, die in gesonderte Sonnenrad-Verzahnungen am Sonnenrad eingreifen. Damit ist also der Kraftübertragungsweg von der Motorwelle auf das Sonnenrad zumindest in doppelter Ausführung vorhanden, sodaß bei Ausfall des einen Übertragungsweges immer noch zumindest ein weiterer zur Verfügung steht.

Die Ritzel können jeweils einstückig ausgeführt sein, wobei die zwei gesonderten Verzahnungen in axialem Abstand geometrisch getrennt am länglichen Ritzel ausgebildet sind. Es besteht aber natürlich auch die Möglichkeit, daß das Ritzel aus zwei Einzelritzeln aufgebaut ist, die beispielsweise verdrehsicher auf einer gemeinsamen Welle oder auf der Motorwelle sitzen. Auch das Sonnenrad kann gemäß einer bevorzugten Ausführungsform aus mindestens zwei gesonderten, miteinander verbundenen Teilen bestehen, wobei die Sonnenrad-Verzahnungen an verschiedenen Teilen des Sonnenrades ausgebildet oder angebracht sind, um die Ausfallsicherheit zu erhöhen.

Der erfindungsgemäße Aktuator kann direkt Drehbewegungen aus der Drehbewegung des Sonnenrades erzeugen. Es ist jedoch auch möglich, Längsbewegungen zu erzeugen, wozu vorzugsweise vorgesehen ist, daß das Sonnenrad eine Spindelmutter trägt, welche auf eine Gewindespindel wirkt und diese bei Drehung der Spindelmutter in eine Längsbewegung versetzt.

Gemäß einer weiteren Variante der Erfindung ist vorgesehen, daß einer der Elektromotoren abwechselnd als Generatoren betrieben wird und die erzeugten Stromsignale einer Überwachungsvorrichtung zuführbar sind.

Damit ist es möglich, nicht funktionierende Elektromotore vorzeitig zu erkennen. Dabei werden die kleineren Elektromotoren (beispielsweise vier) so dimensioniert, daß bereits weniger als alle (beispielsweise drei) ausreichend sind, um die Nennlast zu bringen. Zumindest ein Motor kann abwechselnd durch die Steuerung als Generator betrieben werden und dadurch überwacht werden. Wenn dieser Motor als Generator nicht mehr einwandfrei funktioniert, kann auf einen Fehler des Motors geschlossen werden. Dies führt durch die Tatsache, daß ohnehin mehrere Motoren zum Einsatz kommen, noch nicht zum Ausfall der gesamten Baugruppe, erlaubt aber eine frühzeitige Fehlererkennung.

Damit bei Blockieren eines Motors die Ritzel das Sonnenrad nicht zerstören können, ist gemäß einer weiteren Variante der Erfindung vorgesehen, daß die Ritzel auf der Motorwelle durch Überlast-Steuerelemente, vorzugsweise Scherstifte, befestigt sind.

Bei Blockieren eines Motors scheren die übrigen Motoren über das Sonnenrad den Scherstift ab und die Ritzelwelle des blockierenden Motors kann sich frei drehen und blockiert somit nicht den gesamten Antrieb.

Um bei Bruch eines Wälz- oder Kugellagers für das Sonnenrad eine Notfunktion zu ermöglichen, sind Not-Gleitlager vorgesehen, die bei Versagen des Wälz- oder Kugellagers das Sonnenrad, vorzugsweise in axialer Richtung, führen.

Die Gewindespindel des Spindelantriebs ist vorzugsweise gemäß einer weiteren Variante der Erfindung zwei- oder mehrteilig ausgeführt, wobei die beiden Teile koaxial angeordnet und miteinander mechanisch verbunden sind. Damit ist sichergestellt, daß bei Ausfall des einen oder anderen Gewindespindelteiles immer noch der andere die Funktion der gesamten Anordnung sicherstellt.

Weitere Vorteile und Einzelheiten der Erfindung werden anhand der nachfolgenden Figurenbeschreibung näher erläutert.
Die Fig. 1 zeigt einen schematischen Längsschnitt durch ein Ausführungsbeispiel der erfindungsgemäßen Einrichtung,
die Fig. 2 zeigt einen Schnitt gemäß der Linie A-A der Fig. 1,
die Fig. 3 zeigt einen Schnitt gemäß der Linie B-B der Fig. 1.

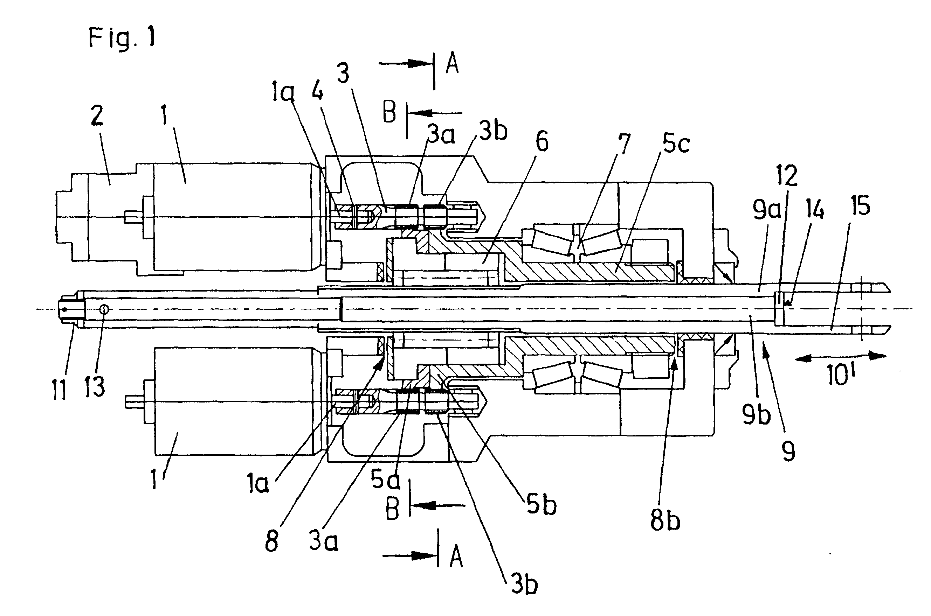

Die in Fig. 1 dargestellte Einrichtung dient zur Erzeugung einer Längsbewegung in Richtung des Doppelpfeiles 10 aus einer Drehbewegung von vier kleinen Elektromotoren 1. Die gesamte Einrichtung bzw. Aktuator ist günstigerweise in einem nicht näher dargestellten Gehäuse untergebracht. Die elektrische Steuerung für die Motoren 1 befindet sich vorteilhafterweise außerhalb des Gehäuses und ist ebenfalls nicht näher dargestellt.

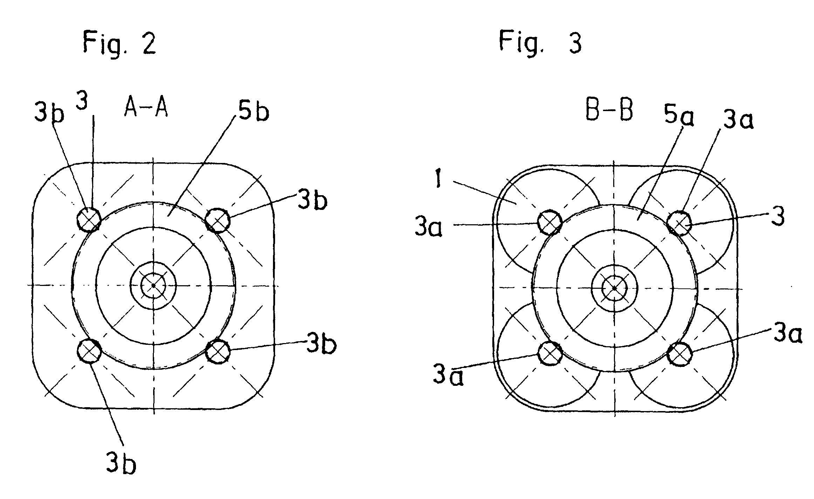

Die vier kleinen Elektromotoren, welche in den vier Quadranten um das zweiteilige Sonnenrad 5a, 5b herum angeordnet sind - wie dies Fig. 3 zeigt - treiben jeweils eine Motorwelle 1a an. Wie bereits erwähnt, können die Motoren durch die Steuerung so betrieben werden, daß jeweils nur drei Motoren antreiben, während der vierte Motor als Generator betrieben wird und in einer Überwachungsvorrichtung dessen Stromsignale ausgewertet werden.

Außerdem ist die Hälfte der Motoren (im vorliegenden Fall zwei) mit einer elektromagnetischen Bremse 2 ausgerüstet, die im stromlosen Zustand bremsen. Diese Bremsen haben die Aufgabe, in den Endlagen die Last sicher zu halten.

Die Motorwelle 1a jedes Elektromotors 1 trägt jeweils ein längliches Ritzel, das erfindungsgemäß zwei räumlich getrennte Verzahnungen 3a und 3b mit axialem Abstand zueinander aufweist. Diese Verzahnungen 3a und 3b greifen in gesonderte Sonnenrad-Verzahnungen am zweiteiligen Sonnenrad 5a und 5b ein, wie dies die Fig. 1 bis 3 zeigen. Es ist zwischen Sonnenrad und Ritzel kein Zwischengetriebe vorgesehen. Die Ritzel 3 sind jeweils einstückig ausgeführt und weisen einen länglichen Grundkörper auf, auf dem die Verzahnungen 3a und 3b einstückig ausgebildet sind.

Das Sonnenrad trägt eine Spindelmutter 6 eines Rollengewindetriebes. Ein Teil des Sonnenrades ist am vorderen Ende der Spindelmutter befestigt, ein anderer Teil am hinteren Ende der Spindelmutter. Bei Versagen eines Sonnenradteiles übernimmt der andere Teil die komplette Last. Die Spindelmutter selbst ist ebenfalls zweiteilig ausgeführt und wirkt über eine größere Anzahl von Gewinderollen auf die Gewindespindel, wobei solche Spindelmuttem handelsüblich erhältlich sind. Ein Abschnitt 5c des Sonnenrades ist als Lagertopf ausgebildet, der über ein Wälz- oder Kugellager 7 drehbar gelagert ist. Bei Versagen dieses Lagertopfes bzw. des Wälzlagers 7 fällt die Antriebsgruppe in die Not-Gleitlager 8a bzw. 8b, die das Sonnenrad 5a, 5b in axialer Richtung führen. Der Antrieb bleibt dadurch funktionsfähig.

Die Gewindespindel ist zweiteilig ausgeführt. Die äußere Gewindestange 9a ist hohl gebohrt. Ein Lastbolzen 9b ist als zweiter Teil in diese Gewindestange eingesteckt und darin mittels der Mutter 11 verspannt, wobei am gegenüberliegenden Ende der Kopf 12 satt anliegt. Auf einer Seite erfolgt die Verdrehsicherung der beiden Gewindespindelteile 9a und 9b über einen durchgesteckten Stift 13. Auf der anderen Seite erfolgt diese verdrehsichere Verbindung dadurch, daß der Kopf 12 einen nichtkreisrunden Querschnitt aufweist und verdrehsicher im Bereich des Bodens 14 der Betätigungsgabel 15 der Gewindespindel anliegt. Beide Gewindespindelteile können beim Versagen des anderen Gewindespindelteiles Drehmomente und Zug/Druck-Kräfte vollständig übertragen.

Wie bereits erwähnt, ist das Gehäuse nicht dargestellt, es kann sich dabei um ein mehrteiliges Gehäuse handeln, das bis auf die elektrische Steuerung alle Baugruppen enthält. Mehrere Zuganker des Gehäuses können die Gehäuselasten übertragen, sodaß bei Versagen eines der Zuganker samt Verschraubung kein Ausfall der ganzen Einheit eintritt. Nicht dargestellte verstellbare fehlerüberwachte Sensoren können den Aktuator-Hub bestimmen. Die Versorgungsleitungen von Motoren, Bremsen und Sensoren werden über zwei oder mehrere Filterplatinen auf zwei oder mehrere unterschiedliche Gerätestecker verteilt, sodaß auch in diesem Bereich eine hohe Ausfallsicherheit gewährleistet ist.

## Patentansprüche

1. Einrichtung zur Erzeugung einer Längsbewegung und/oder einer Drehbewegung mit zwei oder mehreren, vorzugsweise vier, Elektromotoren, deren Motorwellen (1a) Ritzel (3a, 3b) tragen, die direkt in die Außenverzahnung eines gemeinsamen Sonnenrades (5a, 5b, 5c) eingreifen und dieses antreiben, **dadurch gekennzeichnet, daß** die Motorwellen (1a) jeweils Ritzel (3) mit räumlich getrennten Verzahnungen (3a, 3b) tragen, wobei die Verzahnungen (3a, 3b) jedes Ritzels jeweils in gesonderte Sonnenrad-Verzahnungen (5a, 5b) am Sonnenrad eingreifen.

2. Einrichtung nach Anspruch 1, **dadurch gekennzeichnet, daß** die Ritzel (3) jeweils einstückig ausgeführt sind.

3. Einrichtung nach Anspruch 1 oder 2, **dadurch gekennzeichnet, daß** die Ritzel (3) einen länglichen Grundkörper aufweisen, auf dem in axialem Abstand zueinander die geometrisch getrennten Verzahnungen (3a, 3b) ausgebildet oder angebracht sind.

4. Einrichtung nach einem der Ansprüche 1 oder 3, **dadurch gekennzeichnet, daß** pro Motorwelle (1a) ein Ritzel (3) mit einer ersten (3a) und einer räumlich getrennten zweiten Verzahnung (3b) vorgesehen ist, wobei die ersten Verzahnungen (3a) der Ritzel (3) in eine erste Sonnenrad-Verzahnung eingreifen und die zweiten Verzahnungen in eine zweite räumlich getrennte Sonnenrad-Verzahnung eingreifen.

5. Einrichtung nach einem der Ansprüche 1 bis 4, **dadurch gekennzeichnet, daß** das Sonnenrad (5a, 5b) aus mindestens zwei gesonderten, miteinander verbundenen Teilen (5a, 5b) besteht, wobei die Sonnenrad-Verzahnung an verschiedenen Teilen des Sonnenrades (5a, 5b) ausgebildet oder angebracht sind.

6. Einrichtung nach einem der Ansprüche 1 bis 5, **dadurch gekennzeichnet, daß** das Sonnenrad eine Spindelmutter (6) trägt, welche auf eine Gewindespindel (9) wirkt und diese bei Drehung der Spindelmutter (6) in eine Längsbewegung versetzt.

7. Einrichtung nach Anspruch 6, **dadurch gekennzeichnet, daß** die Spindelmutter (6) eine Mutter eines Rollengewindetriebes ist, der über eine Mehrzahl von Gewinderollen auf die Gewindespindel (9) wirkt.

8. Einrichtung nach Anspruch 5 und einem der Ansprüche 6 oder 7, **dadurch gekennzeichnet, daß** ein Teil des Sonnenrades (5a, 5b) am vorderen Ende, der andere Teil am hinteren Ende der vorzugsweise zweigeteilten Spindelmutter (6), befestigt ist.

9. Einrichtung nach einem der Ansprüche 1 bis 8, **dadurch gekennzeichnet, daß** einer der Elektromotoren (1) abwechselnd als Generatoren betrieben wird und die erzeugten Stromsignale einer Überwachungsvorrichtung zuführbar sind.

10. Einrichtung nach einem der Ansprüche 1 oder 9, **dadurch gekennzeichnet, daß** ein Teil, vorzugsweise die Hälfte der Elektromotoren (1), mit einer - vorzugsweise im stromlosen Zustand bremsenden - elektromagnetischen Bremse (2) ausgerüstet ist.

11. Einrichtung nach einem der Ansprüche 1 bis 10, **dadurch gekennzeichnet, daß** die Ritzel (3) auf der Motorwelle (1a) durch Überlast-Steuerelemente (4), vorzugsweise Scherstifte, befestigt sind.

12. Einrichtung nach einem der Ansprüche 1 bis 11, **dadurch gekennzeichnet, daß** ein Abschnitt (5c) des Sonnenrades als Lagertopf ausgebildet ist, der über ein Wälz- oder Kugellager (7) drehbar gelagert ist.

13. Einrichtung nach einem der Ansprüche 1 bis 12, **dadurch gekennzeichnet, daß** abgesehen von Wälz- oder Kugellagern (7) für das Sonnenrad (5a, 5b) Not-Gleitlager (8a, 8b) vorgesehen sind, die bei Versagen des Wälz- oder Kugellagers (7) das Sonnenrad (5a, 5b), vorzugsweise in axialer Richtung, führen.

14. Einrichtung nach einem der Ansprüche 1 bis 13, **dadurch gekennzeichnet, daß** das Sonnenrad eine Spindelmutter (6) trägt, welche auf eine Gewindespindel (9) wirkt und diese bei Drehung der Spindelmutter (6) in eine Längsbewegung versetzt und daß die Gewindespindel (9) zwei- oder mehrteilig ausgeführt ist, wobei die Teile (9a, 9b) koaxial angeordnet und miteinander mechanisch verbunden sind.

15. Einrichtung nach Anspruch 14, **dadurch gekennzeichnet, daß** die beiden Teile (9a, 9b) der Gewindespindel (9) über einen quer durchgesteckten Stift, der vorzugsweise nahe dem einen Ende der Gewindespindel angeordnet ist, miteinander verdrehsicher verbunden sind.

16. Einrichtung nach Anspruch 14 oder 15, **dadurch gekennzeichnet, daß** der koaxial innere Teil der Gewindespindel am einen Ende einen im Durchmesser erweiterten Kopf (12), der an einem Absatz des äußeren Teiles (9a) anliegt, und daß der innere Teil (9b) am anderen Ende über eine Mutter (11) mit dem äußeren Teil verspannt ist.

17. Einrichtung nach Anspruch 16, **dadurch gekennzeichnet, daß** der Kopf (12) einen nichtkreisrunden Querschnitt aufweist und verdrehsicher formschlüssig am äußeren Teil (9a) anliegt, vorzugsweise im Bereich des Bodens (14) einer Betätigungsgabel (15).

## Claims

1. Apparatus for producing a longitudinal movement and/or a rotary movement, comprising two or more, preferably four electric motors whose motor shafts (1a) carry pinions (3a, 3b) which engage directly into the external tooth configuration of a common sun gear (5a, 5b, 5c) and drive same, **characterised in that** the motor shafts (1a) respectively carry pinions (3) with spatially separated tooth configurations (3a, 3b), wherein the tooth configurations (3a, 3b) of each pinion respectively engage into separate sun gear tooth configurations (5a, 5b) on the sun gear.

2. Apparatus according to claim 1 **characterised in that** the pinions (3) are each made in one piece.

3. Apparatus according to claim 1 or claim 2 **characterised in that** the pinions (3) have an elongate main body on which the geometrically separated tooth configurations (3a, 3b) are provided or mounted at an axial spacing relative to each other.

4. Apparatus according to one of claims 1 and 3 **characterised in that** for each motor shaft (1a) there is provided a pinion (3) having a first tooth configuration (3a) and a spatially separated second tooth configuration (3b), wherein the first tooth configurations (3a) of the pinions (3) engage into a first sun gear tooth configuration and the second tooth configurations engage into a second spatially separated sun gear tooth configuration.

5. Apparatus according to one of claims 1 to 4 **characterised in that** the sun gear (5a, 5b) comprises at least two separate interconnected portions (5a, 5b), wherein the sun gear tooth configurations are provided or mounted on different portions of the sun gear (5a, 5b).

6. Apparatus according to one of claims 1 to 5 **characterised in that** the sun gear carries a spindle nut (6) which acts on a screwthreaded spindle (9) and displaces same in a longitudinal movement upon rotation of the spindle nut (6).

7. Apparatus according to claim 6 **characterised in that** the spindle nut (6) is a nut of a roller screwthread drive which acts on the screwthreaded spindle (9) by way of a plurality of screwthread rollers.

8. Apparatus according to claim 5 and one of claims 6 and 7 **characterised in that** a portion of the sun gear (5a, 5b) is fixed to the front end and the other portion is fixed to the rear end of the preferably two-part spindle nut (6).

9. Apparatus according to one of claims 1 to 8 **characterised in that** one of the electric motors (1) is operated alternately as generators and the current signals produced can be fed to a monitoring device.

10. Apparatus according to one of claims 1 and 9 **characterised in that** a portion, preferably half, of the electric motors (1) is provided with an electromagnetic brake (2), preferably braking in the current-less condition.

11. Apparatus according to one of claims 1 to 10 **characterised in that** the pinions (3) are fixed on the motor shaft (1a) by overload control elements (4), preferably shear pins.

12. Apparatus according to one of claims 1 to 11 **characterised in that** a part (5c) of the sun gear is in the form of a bearing cup which is supported rotatably by way of a rolling or ball bearing (7).

13. Apparatus according to one of claims 1 to 12 **characterised in that** apart from rolling or ball bearings (7) for the sun gear (5a, 5b), there are provided emergency plain bearings (8a, 8b) which upon failure of the rolling or ball bearing (7) guide the sun gear (5a, 5b), preferably in the axial direction.

14. Apparatus according to one of claims 1 to 13 **characterised in that** the sun gear carries a spindle nut (6) which acts on a screwthreaded spindle (9) and displaces same in a longitudinal movement upon rotation of the spindle nut (6) and that the screwthreaded spindle (9) is of a two-part or multi-part design, wherein the portions (9a, 9b) are arranged coaxially and are mechanically connected together.

15. Apparatus according to claim 14 **characterised in that** the two portions (9a, 9b) of the screwthreaded spindle (9) are non-rotatably connected together by way of a pin which is fitted transversely therethrough and which is preferably arranged near the one end of the screwthreaded spindle.

16. Apparatus according to claim 14 or claim 15 **characterised in that** the coaxially inner portion of the screwthreaded spindle has at the one end a head (12) of enlarged diameter which bears against a step of the outer portion (9a) and that the inner portion (9b) is braced at the other end by way of a nut (11) to the outer portion.

17. Apparatus according to claim 16 **characterised in that** the head (12) is of a non-circular cross-section and bears non-rotatably in positively locking relationship against the outer portion (9a), preferably in the region of the bottom (14) of an actuating fork (15).

## Revendications

1. Dispositif pour produire un mouvement longitudinal et/ou un mouvement rotatif, avec deux moteurs électriques ou plus, de préférence quatre, dont les arbres (1a) portent des pignons (3a, 3b) qui s'engrènent directement dans la denture extérieure d'une roue solaire commune (5a, 5b, 5c) et entraînent celle-ci, **caractérisé en ce que** les arbres de moteur (1a) portent des pignons respectifs (3) pourvus de dentures (3a, 3b) séparées dans l'espace, les dentures (3a, 3b) de chaque pignon s'engrenant dans des dentures distinctes (5a, 5b) prévues sur la roue solaire.

2. Dispositif selon la revendication 1, **caractérisé en ce que** chaque pignon (3) est réalisé d'une seule pièce.

3. Dispositif selon la revendication 1 ou 2, **caractérisé en ce que** les pignons (3) ont un corps de base allongé sur lequel les dentures (3a, 3b) séparées géométriquement sont formées ou montées avec un certain écartement axial.

4. Dispositif selon la revendication 1 ou 3, **caractérisé en ce qu'**il est prévu pour chaque arbre de moteur (1a) un pignon (3) avec une première denture (3a) et une seconde denture (3b) séparée dans l'espace, les premières dentures (3a) des pignons (3) s'engrenant dans une première denture de roue solaire tandis que les secondes dentures s'engrènent dans une seconde denture de roue solaire séparée dans l'espace.

5. Dispositif selon l'une des revendications 1 à 4, **caractérisé en ce que** la roue solaire (5a, 5b) se compose de deux parties distinctes (5a, 5b) reliées entre elles, la denture de roue solaire étant formée ou montée sur des parties différentes de la roue solaire (5a, 5b).

6. Dispositif selon l'une des revendications 1 à 5, **caractérisé en ce que** la roue solaire porté un écrou pour broche (6) qui agit sur une broche filetée (9) et, lorsqu'il tourne, soumet ladite broche filetée (9) à un mouvement longitudinal.

7. Dispositif selon la revendication 6, **caractérisé en ce que** l'écrou pour broche (6) est un écrou d'un mécanisme fileté à rouleaux qui agit par l'intermédiaire de plusieurs rouleaux filetés sur la broche filetée (9).

8. Dispositif selon la revendication 5 et la revendication 6 ou 7, **caractérisé en ce qu'**une partie de la roue solaire (5a, 5b) est fixée à l'extrémité avant, et l'autre partie à l'extrémité arrière de l'écrou pour broche (6) de préférence divisé en deux.

9. Dispositif selon l'une des revendications 1 à 8, **caractérisé en ce que** l'un des moteurs électriques (1) fonctionne alternativement comme générateur, et les signaux de courant générés sont transmis à un dispositif de surveillance.

10. Dispositif selon la revendication 1 ou 9, **caractérisé en ce qu'**une partie, de préférence la moitié, des moteurs électriques (1) sont équipés d'un frein électromagnétique (2) - qui freine de préférence à l'état sans courant.

11. Dispositif selon l'une des revendications 1 à 10, **caractérisé en ce que** les pignons (3) sont fixés sur l'arbre de moteur (1a) grâce à des éléments de commande de surcharge (4), de préférence des goujons de cisaillement.

12. Dispositif selon l'une des revendications 1 à 11, **caractérisé en ce qu'**une section (5c) de la roue solaire est conçue comme un coussinet de palier qui est monté en rotation grâce à un palier à roulement ou un roulement à billes (7).

13. Dispositif selon l'une des revendications 1 à 12, **caractérisé en ce qu'**il est prévu, en dehors des paliers à roulement ou roulements à billes (7) pour la roue solaire (5a, 5b), des paliers lisses de secours (8a, 8b) qui guident la roue, solaire (5a, 5b), de préférence dans le sens axial, en cas de défaillance du palier à roulement ou roulement à billes (7).

14. Dispositif selon l'une des revendications 1 à 13, **caractérisé en ce que** la roue solaire porte un écrou pour broche (6) qui agit sur une broche filetée (9) et, lorsqu'il tourne, soumet ladite broche filetée (9) à un mouvement longitudinal, et **en ce que** la broche filetée (9) est en deux parties ou plus, les parties (9a, 9b) étant coaxiales et reliées mécaniquement entre elles.

15. Dispositif selon la revendication 14, **caractérisé en ce que** les deux parties (9a, 9b) de la broche filetée (9) sont reliées, immobiles en rotation, par une tige placée transversalement qui est disposée de préférence près d'une extrémité de ladite broche filetée.

16. Dispositif selon la revendication 14 ou 15, **caractérisé en ce que** la partie intérieure, coaxialement, de la broche filetée, présente à une extrémité une tête (12) de plus grand diamètre qui est appliquée contre un décrochement de la partie extérieure (9a), et **en ce que** ladite partie intérieure (9b) est serrée, à l'autre extrémité, sur la partie extérieure grâce à un écrou (11).

17. Dispositif selon la revendication 16, **caractérisé en ce que** la tête (12) présente une section transversale non circulaire et est appliquée, immobile en rotation et par complémentarité de forme, contre la partie extérieure (9a), de préférence dans la zone du fond (14) d'une fourche d'actionnement (15).
